(19) Europäisches Patentamt
European Patent Office
Office européen des brevets

(11) **EP 3 725 821 B1**

(12) **EUROPEAN PATENT SPECIFICATION**

(45) Date of publication and mention
of the grant of the patent:
**07.06.2023 Bulletin 2023/23**

(51) International Patent Classification (IPC):
**C08G 75/0209** (2016.01)   **C08G 75/0227** (2016.01)
**C08G 75/0259** (2016.01)

(21) Application number: **19863994.0**

(22) Date of filing: **23.08.2019**

(52) Cooperative Patent Classification (CPC):
**C08G 75/0204; C08G 75/0209; C08G 75/0227;
C08G 75/0259**

(86) International application number:
**PCT/CN2019/102272**

(87) International publication number:
**WO 2020/125048 (25.06.2020 Gazette 2020/26)**

(54) **HIGH-MOLECULAR-WEIGHT POLYPHENYLENE SULFIDE RESIN AND PREPARATION METHOD AND USE THEREOF**

HOCHMOLEKULARES POLYPHENYLENSULFIDHARZ UND HERSTELLUNGSVERFAHREN UND VERWENDUNG DAVON

RÉSINE DE POLY(SULFURE DE PHÉNYLÈNE) À GRANDE MASSE MOLÉCULAIRE , SON PROCÉDÉ DE PRÉPARATION ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2018 CN 201811550730**

(43) Date of publication of application:
**21.10.2020 Bulletin 2020/43**

(73) Proprietors:
• **Zhejiang NHU Company Ltd.**
  **Shaoxing, Zhejiang 312500 (CN)**
• **Zhejiang University**
  **Hangzhou, Zhejiang 310058 (CN)**
• **Zhejiang NHU Special Materials Co., Ltd.**
  **Shaoxing, Zhejiang 312369 (CN)**

(72) Inventors:
• **CHEN, Zhirong**
  **Hangzhou, Zhejiang, 310027 (CN)**
• **LI, Woyuan**
  **Shaoxing, Zhejiang 312369 (CN)**
• **YIN, Hong**
  **Hangzhou, Zhejiang, 310027 (CN)**
• **HU, Baishan**
  **Shaoxing, Zhejiang, 312500 (CN)**

• **ZHOU, Guiyang**
  **Shaoxing, Zhejiang 312369 (CN)**
• **LIAN, Ming**
  **Shaoxing, Zhejiang 312369 (CN)**
• **QIN, Guangde**
  **Shaoxing, Zhejiang 312369 (CN)**
• **DENG, Hangjun**
  **Shaoxing, Zhejiang 312369 (CN)**
• **ZHANG, Xiongwei**
  **Shaoxing, Zhejiang 312369 (CN)**
• **QIU, Guisheng**
  **Shaoxing, Zhejiang, 312500 (CN)**
• **WU, Kejun**
  **Shaoxing, Zhejiang, 312500 (CN)**

(74) Representative: **Richardt Patentanwälte PartG
mbB
Wilhelmstraße 7
65185 Wiesbaden (DE)**

(56) References cited:
EP-A1- 3 162 839       CN-A- 1 742 037
CN-A- 103 073 720     CN-A- 103 897 187
CN-A- 104 744 698     CN-A- 104 744 698
CN-A- 106 459 413     CN-A- 107 075 117
CN-A- 107 417 907     CN-A- 107 922 618
CN-A- 109 776 798     JP-A- H05 214 102
JP-B2- S6 243 421

## Description

### TECHNICAL FIELD

The disclosure pertains to the field of polymer materials, relates to a high molecular weight polyphenylene sulfide resin, in particular to a linear high molecular weight polyphenylene sulfide resin having high thermal stability, and relates to a preparation method and use of the polyphenylene sulfide resin.

### BACKGROUND

Polyphenylene Sulfide (PPS) is an engineering plastic excellent in heat resistance, chemical resistance, flame retardancy, mechanical strength, electrical properties, dimensional stability, and the like. Since PPS can be molded into various molded articles, films, sheets, fibers, and the like by general melt processing methods such as extrusion molding, injection molding, or compression molding, PPS is widely used in fields such as electronic and electrical equipment, automobile equipment, and so on. Due to the increase in molecular weight, the high molecular weight polyphenylenesulfide has better performance, is more widely used, and is more convenient for processing and application. PPS can be directly processed and molded without pretreatmentand used as a structural material, or directly blended with other metals, non-metal materials and polymer materials as a plastic without pretreatment, and can also be processed into fibers, membranes and films.For example, in the field of electronic appliances, PPS can be used as an electrical insulator, a magnetic tape, a capacitor, a printed circuit board substrate, a solderable PPS insulating part, a sealing (insulation) material of an electronic device, and the like.

The synthesis of high molecular weight polyphenylenesulfide has been reported in many patents outside China. In the early days, Phillips Petroleum Company of the United States used two methods to increase the molecular weight of the resin in order to obtain high molecular weight polyphenylene sulfide: one was to thermally oxidize and crosslink low molecular weight PPS resin to obtain a low crosslinked PPS resin; the other is to add a small amount of the third reactive monomer (usually using a trifunctional or higher polyhalogenated aromatic hydrocarbons)during the reaction to obtain a branched PPS resin. However, the resin obtained by the thermal oxidation crosslinking treatment cannot be extruded into a spinning or formed into a film, and the high molecular weight PPS resin obtained by adding a trifunctional or higher polyhalogenated aromatic hydrocarbon is also poor in spinnability.

Reference document 1 describes a synthesis method for obtaining a branched high molecular weight polyphenylene sulfide byhigh temperature pressure condensation in N-methylpyrrolidone, using p-dichlorobenzene, sodium sulfide and anaidsodium phosphate as raw materials and 1,2,4-trichlorobenzene as an auxiliary material.The intrinsic viscosity is not high, the reaction system comprises many components, the post-treatment is difficult, and the branched polyphenylene sulfide has poor fluidity, is difficult to process, and has low crystallinity, so it is only suitable for plastics and laminates.

Reference document 2 uses p-dichlorobenzene and sodium sulfide as raw materials, uses a composite solvent of N-methylimidazole and N-methylpyrrolidone, combined with a catalyst, to obtain a high molecular weight polyphenylene sulfidebyhigh temperature pressure condensation, which has high strength, good fluidity, and is suitable for spinning process, and has a molecular weight that may be 120,000 to 150,000. However, the branched polyphenylene sulfide has poor fluidity and is difficult to process. Besides, a large amount of additives such as a branching agent, a thickener, a nucleating agent, a prepolymerization catalyst, a branching catalyst, and a copolymerization catalyst are added during the polymerization, so it is difficult to perform the post-treatment purification of the polymer, it is difficult to perform recycling, and it is also difficult to perform the three wastestreatment.This patent does not address separation or recycling of the composite solvent, NaCl, and various additives.

Reference document 3 usesalkali metal hydrosulfide or sulfide and a dihalogenated aromatic compound as raw materials, to which a polymerization aid and phase separation agent are added, and subjects the mixture to dehydration and polymerization in an organic amide solvent, and adds a polyfunctional compound in the later polymerization process, to synthesize a polyphenylene sulfide resin with a high polymerization degree, which has a melt viscosity of 0.1 to 8,000Pa·s. In the later polymerization process, the phase separation agent is preferably water, which is cheap and easy to post-treat. For 1 mol sulfur source, the amount of water generally is equivalent to 2 to 10 mol, preferably 2.3 to 7 mol, more preferably 2.5 to 5 mol.The polyfunctional compound is preferably a polyhalogenated aromatic compound, an aromatic thiol compound, an aromatic carboxylic acid, and derivatives thereof, such as 1,2,4-trichlorobenzene, p-dichlorobenzene, 2,4-dichlorobenzenethiol, 4,4'-thiodiphenylthiol, particularly preferably is 1,2,4-trichlorobenzene.The high water content in the process polymerization system causes a large increase in the reaction pressure, thereby imposing higher requirements on the reaction apparatus. In the Examples of this patent, only one example is used for each of 2,4-dichlorobenzenethiol and 4,4'-thiodiphenylthiol, and the synthesized PPS resins have a melt viscosity of 77 Pa s and 28 Pa·s, respectively; onlytrichlorobenzene is used in the other Examples, and the maximum melt viscosity of the synthesized PPS resins is merely 109 Pa·s. As speculated according to the summary of the invention of this patent, to synthesize a PPS having a higher melt viscosity, it is necessary to add more trichlorobenzene, but this will result in a severe branching degree of PPS and causes many side effects.

So far, regarding the raw materials and processes of sodium sulfide method, a large amount of research has been conducted, and a large number of Japanese patents such as JPpatent publication No. 2001-261832, JPpatent publication No. 2002-265604, JPpatent publication No. 2004-99684, JPpatent publication No.2005-54169, JPpatent publication No. 2006-182993, JPpatent publication No. 2007-9128, JPpatent publication No. 2009-57414, JPpatent publication No. 2010-53335, US patent No. 4,286,018, WO patent No. WO2006-059509 and Chinese patent No. CN200480015430.5 have been applied.These patents study in detail the types and amounts of the polyhalogenated aromatic compound, sulfide, solvent and polycondensation aid, whereinthepolyhalogenated aromatic compound is usually 1,4-p-dichlorobenzene and 1,2,4-trichlorobenzene, the sulfide is usually aqueous sodium sulfide, the solvent is usually N-methyl-2-pyrrolidone (NMP), and thepolycondensation aid is usually sodium acetate.These patents also describe the process control in detail. The reaction process is usually carried out by mixing and dehydrating the organic solvent, the sulfide, the polyhalogenated aromatic compound and the condensation aid at a temperature in the range of 100 to 230°C, and performing condensation reaction at a temperature in the range of 200 to 290°C to produce a PPS resin. In order to obtain a PPS with higher molecular weight, it is necessary to carry out a polycondensation reaction in multiple stages, and the obtained PPS resin is suitable for extrusion molding. These patents do not address separation or recycling of the polycondensation aid sodium acetate.

Besides, the polycondensation reaction process described in the Japanese patents, such as JPpatent publication No. H05-222196, JPpatent publication No. H06-157756, JPpatent publication No. H07-102065, JPpatent publication No. H07-224165, JPpatent publication No. H07-292107, also employs a two-stage reaction method.In order to obtain a PPS resin with high molecular weight, in addition to the addition of a polycondensation aid and trichlorobenzene, a cooling reflux device is further added in the gas phase of the reactor to reduce side reactions of degradation.

There are also many companies that propose ways to increase the molecular weight of polyphenylene sulfide byincreasing the watercontent of the polymerization system.Reference document 4 mentions that the $H_2O/S$ molar ratio is usually greater than 1.0 in the polycondensation reaction stage, and water needs to be supplemented at the late stage of the polycondensation reaction so that the $H_2O/S$ molar ratio reaches 2.5 to 7.0, and the temperature of the system is increased to 245 to 290°C to accomplish the polycondensation. In this way, it is easy to obtain a high molecular weight linear PPS having a melt viscosity in the range of 10 to 30,000 Pa·s, but this greatly increases the reaction pressure, thereby imposing higher requirements on the reaction apparatus.

In Reference document 5, an alkali metal carboxylate and water are added to a molten polyphenylene sulfideand react to extend the chain, and then polyphenylene sulfide is reprecipitated with increased molecular weight. This method not only can increase the molecular weight of linear polyphenylene sulfide, but also can increase the molecular weight of non-linear polyphenylene sulfide. However, the reaction is carried out under high temperature and high pressure conditions, so the conditions are harsh, the equipment is complicated, and the cost is high.

Reference document 6 uses anhydrous sodium sulfide and p-dichlorobenzene as raw materials, and sodium phosphate as an aid to synthesize a polymer by a two-stage reaction. After the completion of the second-stage reaction, sodium sulfide is added to continue the reaction to synthesize a high molecular weight linearpolyphenylene sulfide resin,which has a molecular weight in the range of 45,000 to 51,000. However, anhydrous sodium sulfide is a self-igniting substance, and the risk of storage and use is greatly increased.

Reference document 7 uses sodium sulfide and p-dichlorobenzene as raw materials, alkali metal or alkaline earth metal chloride as an aid to accomplish the prepolymerization and polycondensation processes in a composite solvent system by two-stage heat preservation method. Then, after the reactor is decompressed, the polymerization slurry is filtered, pickled and washed with water to obtain a polyphenylene sulfide polymer, which is then added to the reactor together with sodium sulfide, p-dichlorobenzene, a composite solvent, and an aid, to continue to undergo polycondensation for several hours at 260 to 300°C, followed by decompression, filtration, pickling, washing with water, and drying, to obtain a high molecular weight polyphenylene sulfide resin, of which the melt viscosity is 500 Pa s or more, and the molecular weight is 55,000 to 60,000. The composite solvent used in this patent is obtained by compounding any two of N-methylpyrrolidone, N,N-dimethylacetamide, pyridine, hexamethylphosphorictriamide, 1,3-dimethyl-2-imidazolidinone or N-methylmorpholine, and it has good solubility and low salt content, and is easy to be separated. However, Reference document 7 does not mention the separation or recycling of the composite solvent, NaCl and the aid.

To sum up, thermal crosslinking or addition of a polyhalogenated aromatic compound is generally employed for synthesizing a high molecular weight polyphenylene sulfide resin.

The polyhalogenated aromatic compounds commonly used in the literature reports are 1,3,5-trichlorobenzene, 1,2,4-trichlorobenzene and the like. However, the polyphenylene sulfide resin obtained by the thermal crosslinking method is dark in color and cannot be used for the application requiring the original color. Moreover, the high molecular weight polyphenylene sulfide obtained by the above-mentioned two methods has different degrees of branching, resulting in a change in the properties of the polyphenylene sulfide, and the use thereof is therefore limited. High molecular weight polyphenylene sulfide can also be synthesized by using different sulfur sources, but the equipment is complicated, the purity of the sulfur source is uncontrollable, and the process repeatability and safety cannot meet the production requirements. Besides, increasing the molecular weight of polyphenylene sulfide by means of increasing the water content of the polymerization system or adding the reactive monomer during the polymerization will greatly increase the pressure of the reaction, thereby imposing higher requirements on the reaction device, or much polyphenylene sulfide is lost during the process, the energy consumption is high, and the process is complicated and uncontrollable.

CN 104744698 A (UNIV CHANGZHOU) 1 July 2015 discloses a method for preparing a polyphenylene sulphide (PPS) resin. Sodium sulphide, p-chlorobenzene, lye, a solvent and an additive (alkali metal or alkaline earth metal chloride) are added to an autoclave in a first step. Under the protection of nitrogen, the temperature is increased and pre-polymerization is carried out. A polycondensation reaction between the sodium sulphide and the p chlorobenzene is then carried out for 1 to 3 hours at 240 to 280 °C under a pressure of 1 to 1.5 MPa, followed by lowering the temperature, performing cooling, filtering, pickling and washing with deionized water to obtain a polyphenylene sulphide polymer (PPS). In a second reaction step, the PPS polymer, sodium sulphide, p-dichlorobenzene, the solvent and the additive are sequentially added and reacted under the protection of nitrogen, followed by lowering the temperature, performing cooling, filtering, pickling, washing and drying to obtain a PPS resin.

CN 103 073 720 A (CHINA PETROLEUM & CHEMICAL) 1 May 2013 describes a method of synthesizing a low color high purity fiber-grade polyphenyl thioether resin. Sodium sulphate anhydrous, or crystal water sodium sulphite and santochlor are used as raw material. The synthesized low molecular weight polycaprolactone diphenyl sulfides are further aggregated into the higher degrees of polymerization polyphenylene sulfide.

Therefore, there is still a need for a more simplified, safer, and more controllable synthesis method of polyphenylene sulfide resin, and there is a need to further increase the molecular weight of the polyphenylene sulfide resin so as to expand the application fields of the polyphenylene sulfide resin.

Reference documents

Reference document 1: US 3,354,129
Reference document 2: CN 201410177091.6
Reference document 3: CN 201580060684.7
Reference document 4: CN 88108247.3
Reference document 5: US 4,748,231
Reference document 6: CN 201310142044.3
Reference document 7: CN 201510129926.5
Reference document 8: CN 104744698 A
Reference document 9: CN 103 073 720 A

## SUMMARY

Problems to be solved by the disclosure

The disclosure provides a polyphenylene sulfide resin, and also provides a preparation method and application of the polyphenylene sulfide resin. Further, the polyphenylene sulfide resin provided in the disclosure has a higher molecular weight and more excellent thermal stability than the prior art. Meanwhile, the preparation method of the polyphenylene sulfide according to the disclosure is simpler, has reduced production cost and better safety.

Besides, the disclosure allows adjustment of the melt viscosity of a primary polyphenylene sulfideand the amount of a chain extender in the thickening reaction, so as to realize selective and controllable preparation ofpolyphenylene sulfide resins having different melt viscosities and molecular weights, so that the polyphenylene sulfide resin has excellent thermal stability, and the application scope of the polyphenylene sulfide resin is also broadened.

Solutionto the problems

According to in-depth research, the inventors have found that the above-mentioned technical problems can be solved by the following technical solution.

[1]. The disclosure at first provides a high molecular weight polyphenylene sulfide resin, which is obtained by a thickening reaction between aprimary polyphenylene sulfideand a chain extender represented by the following formula (1):

$$MS\text{-}L\text{-}SM \ldots \quad (1)$$

In formula (1), S represents a sulfur atom, M represents a metal ion, preferably an alkali metal ion, and L represents a divalent linking group containing an aromatic group.

The primary polyphenylene sulfide is a polycondensation product of a sulfur-containing compound and a halogenated aromatic compound.

The high molecular weight polyphenylene sulfide resin has a weight average molecular weight of $6.0 \times 10^4$ or more, preferably $6.0 \times 10^4$ to $10.1 \times 10^4$.

[2].The high molecular weight polyphenylene sulfide resin according to [1], wherein the halogenated aromatic compound is a dihalogenated aromatic compound; the thickening reaction is carried out under an alkaline condition, and the primary polyphenylene sulfide is used in a moltenor meltedform.

[3]. The high molecular weight polyphenylene sulfide resin according to [1] or [2], wherein the primary polyphenylene sulfide has a melt viscosityat 310°C of 40 to 150 Pa·s.

[4]. Thehigh molecular weight polyphenylene sulfide resin according to any one of [1] to [3], the high molecular weight polyphenylene sulfide has a thermal stability index of 0.95 or more, preferably 0.96 or more, and a melt viscosityat 310°C of 250 to 950 Pa·s.

[5]. The high molecular weight polyphenylene sulfide resin according to any one of [1] to [4], the polyphenylene sulfide resin has a nitrogen content of 430 ppm or less, preferably 420 ppm or less, more preferably 410 ppm or less.

[6].The polyphenylene sulfide resin according to any one of [1] to [5], wherein -L- in the formula (1) is a structure represented by the following formula (2):

$$-Ar\text{-}(-S\text{-}Ar\text{-})_n\text{-} \ldots \quad (2)$$

In the formula (2), Ar is a substituted or unsubstituted aromatic group, preferably a phenylene group; n is greater than or equal to 0, preferably 0 to 5.

[7]. The polyphenylene sulfide resin according to [6], wherein -SM and -S- or -SM are in para-positions on the aromatic ring; in $-(-S\text{-}Ar\text{-})_n$-, when $n \geq 2$, S on the same aromatic ring are in para positions.

[8]. The disclosure further provides a high molecular weight polyphenylene sulfide resin, which has

a weight average molecular weight of $6.0 \times 10^4$ or more, preferably $6.0 \times 10^4$ to $10.1 \times 10^4$;
athermal stability index of 0.95 or more, preferably 0.96 or more;
a melt viscosityat 310°C of 250 to 950 Pa·s.

[9]. Furthermore, the disclosure provides a method for preparing a high molecular weight polyphenylene sulfide resin, comprising:

a polycondensation reaction to obtain a primary polyphenylene sulfide, the polycondensation reaction using a sulfur-containing compound and a halogenated aromatic compound as reactants;
athickening reaction to obtain a high molecular weight polyphenylene sulfide resin, the thickening reactionbeing carried out between the primary polyphenylene sulfideand a chain extender represented by the following formula (1):

$$MS\text{-}L\text{-}SM \ldots \quad (1)$$

In formula (1), M represents a metal ion, preferably an alkali metal ion, and L represents a divalent linking group containing an aromatic group.

The high molecular weight polyphenylene sulfide resin has a weight average molecular weight of $6.0 \times 10^4$ or more, preferably $6.0 \times 10^4$ to $10.1 \times 10^4$.

[10]. The method according to [9], wherein the reaction temperature of the polycondensation reaction is 220 to 280°C; the reaction is carried out in the presence of a polycondensation aid selected from one or more of alkalicompound and fatty acid; the sulfur-containing compound is selected from a sulfur hydride; the halogenated aromatic compound is a dihalogenated aromatic compound, preferably a dichloroaromatic compound, more preferably dichlorobenzene.

[11]. The method according to [10], wherein the alkali compound is used in an amount of 1.0 to 1.02 mol based on 1.0 mol of total sulfur; the fatty acid is selected from one or more of medium or short-chain fatty acid, and a molar ratio of the fatty acid and the sulfur-containing compound is 0.8 to 1.2:1.

[12].The method according to any one of [9] to [11], whereinin the polycondensation reaction, the halogenated aromatic compound is used in an amount of 1.00 to 1.02 mol based on 1 mol of total sulfur; the polycondensation reaction is carried out in the presence of a solvent of which the amount is 4.2 to 4.7 mol based on 1 mol of total sulfur.

[13].The method according to any one of [9] to [12], whereinthe polycondensation reaction is carried out under acondition in which the water content is less than 0.5 mol/mol total sulfur; the method further comprises steps of separation and/or washing and/or dryingafter the polycondensation reaction, preferably the separation being carried out in the range of 155to180°C.

[14]. The method according to [13], the washing comprises washing with water or pickling, and washing is performed until the mass content of halide ions in the filtrate is 0.01% or less.

[15]. The method according to any one of [9] to [14], the primary polyphenylene sulfide has a weight average molecular weight of $3.0\times 10^4$ to $5.0\times 10^4$, a melt viscosityat 310°C of 40 to 150 Pa s, and a thermal stability index of 0.96 or more.

[16].The method according to any one of [9] to [15], the high molecular weight polyphenylene sulfide has a thermal stability index of 0.95 or more, preferably 0.96 or more; and a melt viscosity at 310°C of 250 to 950 Pa·s.

[17]. The method according to any one of [9] to [16], -L- in the formula (1) is a structure represented by the following feature (2):

$$-Ar-(-S-Ar-)_n- ... \qquad (2)$$

In the formula (2), Ar is a substituted or unsubstituted aromatic group, preferably a phenylene group; n is greater than or equal to 0, preferably 0 to 5.

[18]. The method according to [17], wherein -SM and -S- or -SM are in para-positions on the aromatic ring; in $-(-S-Ar-)_n-$, when n≥2, S on the same aromatic ring are in para positions.

[19].Furthermore, the disclosure provides a composition, which comprises the high molecular weight polyphenylene sulfide resin according to any one of [1] to [8], or comprises a high molecular weight polyphenylenesulfideresinobtained by the method according to any one of [9] to [18].

[20]. Use of the high molecular weight polyphenylene sulfide resin according to any one of [1] to [8], or the high molecular weight polyphenylene sulfide resin obtained by the method according to any one of [9] to [18], or the composition according to [19] in automotive parts, electronic/electrical equipment, chemical engineering, machinery industry.

[21]. An article obtained by molding using the high molecular weight polyphenylene sulfide resin according to any one of [1] to [8], or the high molecular weight polyphenylene sulfide resin obtained by the method according to any one of [9] to [18], or the composition according to [19], the article comprising a plate, a pipe, a rod, a fiber, a membrane or a film.

Effects of the disclosure

The high molecular weight polyphenylene sulfide resin, the preparation method and application thereof in the disclosure have the following excellent effects:

1) The disclosure uses a mercapto-containing metal aromatic compound as a chain extender to allow a mercapto metal moiety to react with a halogen terminal group of a primary polyphenylene sulfide to prepare a high molecular weight polyphenylene sulfide resin, and the molecular structure is similar to the primary polyphenylene sulfide, and the excellent properties of linear polyphenylene sulfide resin can be retained.

2) The high molecular weight polyphenylene sulfide resin provided by the disclosure has a thermal stability index of 0.95 or more, a weight average molecular weight of $6.0\times 10^4$ to $10.0\times10^4$, a melt viscosityat 310°C of 250 to 950 Pa·s, and it can be directly used for extrusion, injection molding, calendering, applications in a wide range.

3) The polyphenylene sulfide resin provided by the disclosure has a controllable melt viscosity. In the preparation, a primary polyphenylene sulfide is first synthesized and subjected to preliminary purification, and then by adjusting the melt viscosity of the primary polyphenylene sulfideand the proportion of the chain extender, the effect of other side reactants generated in the system during the synthesis of the primary polyphenylene sulfideon the second step of viscosity-increasing reaction is eliminated. As a result, it is possible to realize the control of the melt viscosity and molecular weight of the polyphenylene sulfide resin, so as to meet relevant parameter requirements of the subsequent application.

**Detailed Embodiments**

The high molecular weight polyphenylene sulfide resin of the disclosure and the preparation method and application thereof will be described in detail below. It should be noted that, unless otherwise stated, the units used in the disclosure are all international units in the art. In addition, the point numerical values or numerical ranges present below in the disclosure should be understood to include the industrially permitted errors.

In the disclosure, the physical properties and characteristics are measured by the following methods.

Fluidity (melt viscosity)

The fluidity in the disclosure is characterized by melt viscosity.

In the embodiments of the disclosure, the melt viscosity of the polyphenylene sulfide resin can be controlled within a suitable range by adjusting the polymerization parameters and the temperature profile, and meanwhile the adjustment of the terminal groups also has some influence on the melt viscosity.

In order to more accurately characterize the fluidity of the linear high molecular weight polyphenylene sulfide resin with high thermal stability according to the disclosure, the melt viscosity is measured as follows.

In the disclosure, the melt viscosity of polyphenylene sulfide is measured by an LCR7001 capillary rheometer manufactured by Dyniscocompany. During the measurement, the polymer sample is first introduced into the device, the temperature is set to 310°C and maintained for 5 minutes, and then the melt viscosity is measured at a shear rate of $1216 \text{ sec}^{-1}$.

Thermal stability

In the disclosure, the thermal stability is characterized by a thermal stability index.

In polyphenylene sulfide resin, the nitrogen content of the terminal group has an important influence on the thermal stability of the resin. The nitrogen content of the terminal group is brought about by the side reaction of the reaction solvent in the polycondensation reaction for preparing the primary polyphenylene sulfide. In the polycondensation reaction, a fatty acid is used as a polycondensation aid, especially a $C_5$-$C_6$ fatty acid is used as a polycondensation aid, which can effectively reduce the nitrogen content of the terminal group, and can significantly improve the thermal stability of the primary polyphenylene sulfide and the polyphenylene sulfide resin.

In order to more accurately characterize the thermal stability of the linear high molecular weight polyphenylene sulfide resin with high thermal stability according to the disclosure, the thermal stability index is measured as follows.

In the disclosure, the melt viscosity of polyphenylene sulfide is measured by an LCR7001 capillary rheometer manufactured by Dyniscocompany. During the measurement, the polymer sample is first introduced into the device, the temperature is set to 310°C and maintained for a certain period of time, and then the melt viscosity is measured at a shear rate of $1216 \text{ sec}^{-1}$.

After the polymer sample is maintained at 310°C for 5 minutes, the melt viscosity is measured at a shear rate of $1216 \text{ sec}^{-1}$, which is marked as $MV_1$; After the polymer sample is maintained at 310°C for 30 minutes, the melt viscosity is measured at a shear rate of $1216 \text{ sec}^{-1}$, which is marked as $MV_2$. $MV_2/MV_1$ is just the thermal stability. The larger this ratio, the better the thermal stability of the polymer.

Weight average molecular weight

The weight average molecular weight according to the disclosure is calculated by gel permeation chromatography (GPC), which is one of size exclusion chromatography, in terms of polystyrene. The measurement conditions of GPC are shown below:

Device: PL GPC220;
Column name: Plgel Mixed-B;
Eluent: 1-chloronaphthalene;
Detector: differential refractive index detector;
Column temperature: 210°C;
Pre-constant bathtemperature: 240°C;
Detector temperature: 210°C;
Flow: 1.0mL / min;
Sample injection volume: 100 $\mu$L.

<The First Embodiment>

In the first embodiment of the disclosure, the disclosure provides a high molecular weight polyphenylene sulfide resin, especially a linear high molecular weight polyphenylene sulfide resin. In some preferred embodiments of the disclosure, the high molecular weight polyphenylene sulfide is obtained by performing a thickening reaction between aprimary polyphenylene sulfide and a chain extender. The primary polyphenylene sulfide is a polycondensation product of a sulfur-containing compound and a halogenated aromatic compound.

Chain extender

In the disclosure, a mercapto-containing metal aromatic compound represented by the following formula (1) is used as a chain extender:

MS-L-SM ...              (1)

In formula (1), M represents a metal ion, preferably an alkali metal ion, and typically a sodium ion and/or a potassium ion.

L represents a divalent linking group containing an aromatic group, which may be an aromatic hydrocarbon group having 6 to 30 carbon atoms. Without affecting the effect of the disclosure, these aromatic hydrocarbon groups may have arbitrary substituents. In some preferred embodiments of the disclosure, the aromatic group may be a phenylene group or a biphenylene group.

In other preferred embodiments of the disclosure, the chain extender represented by the formula (1) may have a structure represented by a formula (2):

-Ar-(-S-Ar-)$_n$- ...              (2)

In the formula (2), Ar is a substituted or unsubstituted aromatic group, preferably an aromatic alkylene group, more preferably a phenylene group; n is greater than or equal to 0, preferably 0 to 5.

In a preferred embodiment of the disclosure, when n = 0, MS- or -SM in the formula (1) form a para structure on the aromatic group, and typically has a para-substituted structure on the phenylene group. In the formula (2), when n $\geq$1, -S- on the same aromatic group (for example on phenylene) are para-structured.

Preferably, the mercapto-containing metal aromatic compound of the formula (1) contains an average of 1-6 phenylene groups per molecular chain, and in each molecular chain in the structure of the formula (2), n is 0 to 5.

The mercapto-containing metal aromatic compound represented by the formula (1) can be formed by halogenating, especially reaction between a brominated aromatic compound and $M^1HS$ in the presence of an alkaline compound and an organic solvent at a certain temperature.

The above-mentioned $M^1$ may be the same as or different from M in formula (1), and is selected from metal ions, preferably from alkali metal ions, especially from sodium ion or potassium ion. The alkaline compound may be selected from an alkaline compound formed from a metal ion, preferably an alkaline compound formed from an alkali metal ion, more preferably is a hydroxide of an alkali metal. The organic solvent is not particularly limited, but from the perspective of synthetic yield, it may be selected as a polar organic solvent, and typically, it may be one or two of NMP or DMF.

For the synthesis of the chain extender represented by formula (1) or formula (2), in some preferred embodiments of the disclosure, halogenation, especially a coupling reaction between a brominated aromatic compound and a hydrosulfide represented by $M^1HS$ can be used. Typically, the brominated aromatic compound is p-dibromobenzene or 4,4'-dibromodiphenylsulfide. Based on 1 mol of a halogenated aromatic compound, the amount of $M^1HS$ used is 1.16 to 2.0 mol, and the amount of the alkaline compound is 1.16 to 2.0 mol.

In the synthesis reaction of the mercapto-containing metal aromatic compound of the formula (1) or (2), the reaction temperature is controlled at 190 to 220°C, and the reaction time is controlled at 1 to 3 hours. Based on 100g of the primary polyphenylene sulfide, the amount of the halogenated aromatic compound is 0.01 to 0.24mol.

In the disclosure, by using a mercapto-containing metal aromatic compound as a chain extender, the -SM terminal group on the chain extender reacts with a halogen terminal group of the primary polyphenylene sulfide, so that the subsequent product forms a molecular chain structure similar to the primary polyphenylene sulfide. The melt viscosity of the primary polyphenylene sulfide can be controlled in a lower range, and the ratio of the halogen source to the sulfur source can be controlled in a higher range during the polycondensation process. The synthetic primary polyphenylene sulfide has a higher proportion of halogen terminal groups, which is beneficial to improve the thermal stability of the polyphenylene sulfide resin, and it is also beneficial to the subsequent reaction with the -SM terminal group on the chain extender so as to increase the melt viscosity and the molecular weight.

In the embodiments of the disclosure, according to the different requirements of the melt viscosity and molecular weight of the final polyphenylene sulfide resin product, the melt viscosity and the molecular weight can be controlled by adjusting the melt viscosity of the primary polyphenylene sulfide and the proportion of the added chain extender.

Primary polyphenylene sulfide

In the disclosure, the primary polyphenylene sulfide is obtained by polycondensation reaction between a sulfur-containing compound and a halogenated aromatic compound.

In the disclosure, the sulfur-containing compound to be used is not particularly limited in principle, which may be, for example, a sulfur simple substance, an alkali metal sulfide, an alkali metal hydrosulfide, or the like generally used in the art. Furthermore, the inventors of the disclosure have found that, from the perspective of taking thermal stability into consideration, for example, in order to reduce the thermal stability deterioration caused by the presence of -S-S- in the polyphenylene sulfide structure, the sulfur-containing compound in a preferred embodiment of the disclosure is preferably an alkali metal hydrosulfide, and the alkali metal is not limited in principle, but from the perspective of convenience of subsequent processing, sodium is preferable, that is, the sulfur-containing compound is preferably NaHS.

The halogenated aromatic compound may be the same as or different from the halogenated aromatic compound used in the synthesis of the chain extender above. In some preferred embodiments, a dihalogenated aromatic compound may be used, which may typically be dibromoaromatic compounds or dichloro aromatic compound, and typically, dichlorobenzene may be used. In some preferred embodiments of the disclosure, the primary polyphenylene sulfide obtained through a polycondensation reaction has a melt viscosity at 310°C of 40 to 150 Pa·s.

High molecular weight polyphenylene sulfide resin

The high molecular weight polyphenylene sulfide resin of the disclosure is obtained by further conducting a thickening reaction between a chain extender and a primary polyphenylene sulfide which is a product of poly condensation between a sulfur-containing compound and a halogenated aromatic compound. The high molecular weight polyphenylene sulfide resin of the disclosure has a weight average molecular weight of $6.0 \times 10^4$ or more, preferably $6.0 \times 10^4$ to $10.0 \times 10^4$; a thermal stability index of 0.95 or more, preferably 0.96 or more; and a melt viscosity at 310°C of 250 to 950 Pa·s.

In a more preferred embodiment, the polyphenylene sulfide resin has a nitrogen content of 430 ppm or less, preferably 420 ppm or less, more preferably 410 ppm or less.

<The second embodiment>

In the second embodiment of the disclosure, a method for preparing a high molecular weight polyphenylene sulfide resin is disclosed, comprising the following steps:

a polycondensation reaction to obtain a primary polyphenylene sulfide;
a thickening reaction to obtain a high molecular weight polyphenylene sulfide resin.

Polycondensation reaction

In the disclosure, the primary polyphenylene sulfide is obtained by polycondensation reaction. The same as <the first embodiment> described above, the polycondensation reaction uses a sulfur-containing compound and a halogenated aromatic compound as reactants. The sulfur-containing compound is selected from hydrosulfides, preferably is sodium hydrosulfide or potassium hydrosulfide, and more preferably is sodium hydrosulfide; the halogenated aromatic compound may be the same as or different from the halogenated aromatic compound used in the synthesis of the chain extender above. In some preferred embodiments, a dihalogenated aromatic compound may be used, which may typically be dibromo aromatic compounds or dichloro aromatic compound, and typically, dichlorobenzene may be used.

The reaction temperature of the polycondensation reaction is 220 to 280°C, preferably 240 to 270°C. In a preferred embodiment of the disclosure, the polycondensation reaction is performed in the presence of a polycondensation aid, the polycondensation aid is selected from one or more of alkaline compounds and fatty acids.

The alkaline compound is not particularly required, and the alkaline compound described above may be used. The alkaline compound may be selected from alkaline compounds formed from metal ions, preferably be alkaline compounds formed from alkali metal ions, more preferably be alkali metal hydroxides, and may typically be sodium hydroxide and / or potassium hydroxide. There is no particular requirement for the form of adding the alkaline substance, which may be added directly or in the form of an aqueous solution.

In a preferred embodiment of the disclosure, the use of a fatty acid as one of the polycondensation aids can effectively inhibit the formation of nitrogen-containing terminal groups in the primary polyphenylene sulfide. The fatty acid may be a fatty acid commonly used in the art. In a preferred embodiment of the disclosure, one or more of short- and medium-chain fatty acids may be used, i.e., fatty acids having a carbon number of 12 or less on the carbon chain of the fatty acid, and more preferably one or more of $C_5$-$C_6$ fatty acids are used. Related research shows that the nitrogen-containing terminal groups come from side reaction involved by polar solvents (such as solvents with high boiling points such as NMP) in the reaction system, and the thermal stability of the primary polyphenylene sulfide can be effectively improved by reducing the nitrogen content of the terminal-group. Further, the $C_5$-$C_6$ fatty acid is preferably hexanoic acid, valeric acid, isovaleric acid, 2-ethylbutyric acid and mixtures thereof in any proportion.

In a preferred embodiment of the disclosure, one or more of the alkaline compounds and one or more of the fatty acids are used simultaneously as the polycondensation aids.

In the polycondensation reaction, for the relative amount of the sulfur-containing compound to the halogenated aromatic compound, in a preferred embodiment of the disclosure, based on 1.0 mol of total sulfur, the amount of the halogenated aromatic compound is 1.00 to 1.02 mol. For the relative amount of the polycondensation aid in the polycondensation reaction, based on 1.0mol of total sulfur, the total amount of the alkaline substance is 1.00 to 1.02mol, and the molar ratio of the fatty acid to the sulfur-containing compound is 0.8 to 1.2: 1.

In a preferred embodiment of the disclosure, the polycondensation reaction is performed in the presence of a solvent. The solvent is preferably a polar organic solvent, which, for example, may be one or two selected from NMP and DMF, and more preferably beNMP.The presence of the organic solvent in the disclosure can provide a good reaction place for the polycondensation reaction, and can also remove water in the reaction system as much as possible through dehydration or water separation reaction. For the amount of the reaction solvent for the polycondensation reaction solvent, in some preferred embodiments, based on 1.0 mol of total sulfur, the total amount of the solvent is 4.2to 4.7 mol.

The polycondensation reaction needs to control the water content in the reaction system. Generally, the sulfur-containing compound is dehydrated to control the water content in the polycondensation reaction system to be less than 0.5 mol / mol total sulfur. When an alkaline substance and a fatty acid are used as polycondensation aids, it is preferable to first dehydrate the alkaline substance and the fatty acid, and then add a sulfur-containing compound for secondary dehydration. This can reduce the loss of sulfur caused by the decomposition and side reactions of the sulfur-containing compound under long-term dehydration conditions.

After the polycondensation reaction is completed, some preferred embodiments of the disclosure further comprise post-treatment of the primary polyphenylene sulfide. In a preferred embodiment of the disclosure, after the polycondensation reaction, the system is cooled to 155 to 180°C, and the subsequent separation treatment is performed at this temperature. Such a temperature level is higher than that of the prior art, because the inventors of the disclosure have found that the treatment at the above temperature can precipitate the primarypolyphenylene sulfide with a relatively high molecular weight as much as possible while remaining the primary polyphenylene sulfide of which the reaction is insufficient and which has low molecular weight in the reaction solution, thereby reducing the nitrogen content in the final product, because the primarypolyphenylene sulfide with a low molecular weight contains more nitrogen, and meanwhileeliminating the influence of the nitrogen terminal group on the primarypolyphenylene sulfide with a low molecular weightover the thickening reaction of the chain extender in the second step. The separation treatment may include a method such as precipitation, filtration, etc., and filtration is preferably used. The filtration method is not particularly limitedin the disclosure. In order to improve the filtration efficiency, the polycondensation reaction system can be filtered under a reduced pressure to obtain the primary polyphenylene sulfide.

The post-treatment step of the polycondensation reaction product further includes one or more of washing and drying, and so on. In some cases, the primary polyphenylene sulfide may be obtained in the form of a filter cake.The washing includes pickling and water washing. The degree of washing is based on the removal of free halide ions as much as possible. For example, the washing can be performed until the residual mass ratio of the halide ions, especially the chloride ions, in the filtrate of washing the product filter cake is 0.01% or less. The pickling means washing the filter cake with hydrochloric acid, sulfuric acid and phosphoric acid, preferably hydrochloric acid. Based on 1.0mol fatty acid, the amount of acid used in the pickling is 1.1 to 1.2mol.

In some typical embodiments, the above-mentioned preparation of the primary polyphenylene sulfide specifically comprises the following steps:

1) addingan alkaline compound and a fatty acid to the solvent to perform dehydration treatment;
2) adding a sulfur-containing compound to the dehydration solution obtained in step 1) to perform secondary dehydration;
3) adding a para-dihalo aromatic compound and conducting a polycondensation reaction to obtain a reaction solution;
4) separatingthe reaction solution by cooling, followed by washing, and drying, to obtain the primary polyphenylene sulfide.

The temperature for the dehydration and the second dehydration in step 1) and step 2) described above is 180 to 250°C. The secondary dehydration is performed until the water content in the reaction system is less than 0.5mol / mol total sulfur.

Thickening reaction

In the disclosure, the thickening reaction is thickening reaction between the primary polyphenylene sulfide and a chain extender represented by the following formula (1):

MS-L-SM ...                  (1)

In formula (1), M represents a metal ion, preferably an alkali metal ion, and L represents a divalent linking group containing an aromatic group. The specific form of the formula (1) applicable to the disclosure is the same as that disclosed in <The first embodiment>.

In the thickening reaction, from the perspective of obtaining a polyphenylene sulfide product with higher molecular weight, in a preferred embodiment of the disclosure, the primary polyphenylene sulfide may be used in a molten or melted form.

In some preferred embodiments, the thickening reaction of the disclosure is performed in the presence of a solvent. The solvent may be the same as or different from the solvent used in the polycondensation reaction described above, which preferably is NMP and/or DMF, and more preferably is NMP.

The thickening reaction is performed under an alkaline condition, and the pH in the reaction system is controlled to 9 to 12, preferably 9.5 to 11. The pH value of the thickening reaction is adjusted by adding an alkaline compound, and the alkaline compound may be the same as or different from the alkaline compound in the polycondensation reaction described above, preferably be sodium hydroxide or potassium hydroxide, and more preferably be sodium hydroxide; there is no particularly strict requirement for the total amount of reaction solvent, which is generally 3 to 6 times the quality of the primary polyphenylene sulfide.

The reaction temperature of the thickening reaction is 250 to 280°C, preferably 260 to 280°C. In some preferred embodiments of the disclosure, the temperature slope of the thickening reaction may be 1.0 to 3.0°C/min. When the temperature reaches the set temperature or the desired reaction temperature, the reaction system is insulated. In a preferred embodiment, the insulation is performed for 1 to 3 hours.

The above-mentioned method for preparing a high molecular weight polyphenylene sulfide resin may further comprise a post-treatment process after the completion of the thickening reaction described above. There is no particular limitation on the means of the post-treatment, which may be common post-treatment means in the art. For example, separation by filtration is performed to obtain a product filter cake. The filter cake may be further purified by means of washing. In some preferred embodiments, the filter cake is washed with water for several times until the pH of the filtrate is 6 to 8, and the washed filter cake is dried to obtain a high molecular weight polyphenylene sulfide resin finished product.

As mentioned above, in the disclosure, according to the different requirements of the melt viscosity and molecular weight of the polyphenylene sulfide resin, the melt viscosity and the molecular weight can be controlled by adjusting the melt viscosity of the primary polyphenylene sulfide and the proportion of the added chain extender. The method for preparing a high molecular weight polyphenylene sulfide resin according to the disclosure has simple control method and strong controllability.

<The third embodiment>

The third embodiment of the disclosure provides a composition, which comprises the high molecular weight polyphenylene sulfide resin in <the first embodiment> and the high molecular weight polyphenylene sulfide resin obtained by the preparation method in <the second embodiment>

In the resin composition, based on different purposes of use, the other resin components are not limited, which may be various engineering plastics and conventional resins which have good compatibility with polyphenylene sulfide resin.

Besides, in the aforesaid resin composition, various additives such as a flame retardant, a weathering agent, a filler and other components may be added as needed to meet various industrial needs.

<The fourth embodiment>

The fourth embodiment of the disclosure provides applications of the high molecular weight polyphenylene sulfide resin of the disclosure. The polyphenylene sulfide resin of the disclosure and the composition comprising the same have higher molecular weight and improved melt viscosity with respect to similar products in the prior art.

The polyphenylene sulfide resin or the composition thereof of the disclosure can be used in application fields such as automobile parts, electronic / electrical equipment, chemical industry, and machinery industry. In particular, it can be used in the production of various plates, pipes and rods, and can also be used to make fibers, membranes, films, etc.

The plates, pipes and rods can be machined like metal, such as cutting, grinding, polishing, drilling, etc., to meet various shape and process requirements.

The fibers, membranes, films, etc. can be used in applications that require high strength, temperature resistance, corrosion resistance, and electrical insulation, such as webbing products, high-strength yarns, corrosion-resistant filter materials, electrical insulators, magnetic recording tapes, capacitors, printed circuit board substrates, etc.

## EXAMPLES

Hereinafter, the disclosure will be described more specifically by examples, but the disclosure is not limited to these examples.

In the disclosure, the physical properties and characteristics are measured by the following methods.

(1) Measurement method of melt viscosity

In the disclosure, the melt viscosity of polyphenylene sulfide is measured by an LCR7001 capillary rheometer manufactured by Dyniscocompany. During the measurement, the polymer sample is first introduced into the device, the temperature is set to 310°C and maintained for 5 minutes, and then the melt viscosity is measured at a shear rate of 1216 $sec^{-1}$.

(2) Measurement of thermal stability

After the polymer sample is maintained at 310°C for 5 minutes, the melt viscosity is measured at a shear rate of 1216 $sec^{-1}$, which is marked as $MV_1$; After the polymer sample is maintained at 310°C for 30 minutes, the melt viscosity is measured at a shear rate of 1216 $sec^{-1}$, which is marked as $MV_2$. $MV_2/MV_1$ is just the thermal stability index. The larger this ratio, the better the thermal stability of the polymer.

(3) Measurement method of nitrogen content

The nitrogen content of the polyphenylene sulfide is measured with a trace sulfur and nitrogen analyzer.

(4) Measurement method of weight average molecular weight

The weight average molecular weight of the polyphenylene sulfide is calculated by gel permeation chromatography.

(5) Total sulfur

In the examples, the total sulfur before dehydration is the sulfur content in the fed NaHS, and the total sulfur after dehydration is the sulfur content in the fed NaHS minus the sulfur loss in the dehydration, i.e.,

$$[total\ sulfur\ before\ dehydration] = [sulfur\ content\ in\ the\ fed\ NaHS]$$

$$[total\ sulfur\ after\ dehydration] = [sulfur\ content\ in\ the\ fed\ NaHS] - [sulfur\ loss\ in\ the\ dehydration]$$

(6) Total amount of the alkaline compound

In the examples, NaOH was used as the alkaline compound. Therefore, the total amount of the alkaline compound is the total NaOH amount.

The total NaOH amount is the sum of the fed NaOH minus the NaOH required for the aid reaction, plus the NaOH produced by dehydration, i.e.,

$$[total NaOH\ amount] = [the\ fed\ NaOH] - [NaOH\ required\ for\ the\ aid\ reaction] + [NaOH\ produced\ by\ dehydration]$$

## Synthesis examples (Preparation of primary polyphenylene sulfides):

The synthesis processes of the primary polyphenylene sulfides (hereinafter, referred to as PPS-1, PPS-2, PPS-3) are as follows.

a. Preparation of PPS-1

In a 150 L reactor, 29.93 kg (300.0 mol) of N-methyl-pyrrolidone (NMP), 17.90 kg (179mol) of 40% aqueous sodium hydroxide solution and 9.28 kg (80.0 mol) of hexanoic acid were added, and heated up to 90°C at a rate of 1.0°C/min under a stirring speed of 200 rpm and nitrogen protection, insulated for 3 hours; after the insulation, the system was warmed up to 180°C at a rate of 1.0°C/min to remove 10.78 kg of aqueous solution (98.50% water content), and then cooled down to 130°C. 11.22 Kg (100.0 mol) 50% sodium hydrosulfide and 4.96 kg (50.0 mol) of NMP were added and heated to 200°C at a rate of0.7°C/min at the same stirring speed to remove 7.52 kg of aqueous solution (91.01% water content), and cooled down to 140°C after dehydration. At this time, the amount of total sulfur in the system was 99.0mol, the water content was 38.28mol, and the molar ratio of total NaOH / total sulfur was 1.01.

In the above reactor, 14.85 kg (101.0mol) of p-dichlorobenzene (PDCB) and 9.23 kg (92.52mol) of NMP were added, and the molar ratio of PDCB / total sulfur was 1.02. The temperature was raised to 220°C in about 1 hour and maintained for 3 hours; then,the temperature was raised to 260°C at a rate of 1.2°C/min, and maintained for 2 hours. After the insulation, the temperature was lowered to 180°C in about 2 hours. The contents in the reactor were centrifuged and spin-dried. The filter cake was rinsed with 30.0 kg of 180°C NMP, spin-dried, and then rinsed with 35.04 kg of a 10% hydrochloric acid solution (containing 96.0 mol of hydrochloric acid) and spin-dried. The filtrates were combined and subject to azeotropic distillation to recover 9.22 kg of hexanoic acid, followed by vacuum distillation to recover 73.26 kg of NMP solvent.

The filter cake rinsed above was washed with deionized water for several times, and the washed filter cake was dried to obtain PPS-1, of which the mass yield was 93.6%, the melt viscosity was 47 Pa s, the nitrogen content was 410 ppm, the thermal stability was 0.973, and the weight average molecular weight was $3.2 \times 10^4$.

b. Preparation of PPS-2

In a 150 L reactor, 29.93 kg (300.0 mol) of NMP, 15.79 kg (197.4 mol) of 50% aqueous sodium hydroxide solution and 10.20 kg (100.0 mol) of pentoic acid were added, and heated up to 120°C at a rate of 2.0°C/min under a stirring speed of 200 rpm and nitrogen protection, insulated for 1 hour; after the insulation, the system was warmed up to 200°C at a rate of 2.0°C/min to remove 8.01 kg of aqueous solution (98.12% water content), and then cooled down to 120°C. 11.22 Kg (100.0 mol) 50% sodium hydrosulfide and 3.57 kg (36.0 mol) of NMP were added and heated to 250°C at a rate of 1.0°C/min at the same stirring speed to remove 7.68 kg of aqueous solution (92.07% water content), and cooled down to 160°C after dehydration. At this time, the amount of total sulfur in the system was 98.7 mol, the water content was 20.88 mol, and the molar ratio of total NaOH / total sulfur was 1.00.

In the above reactor, 14.65 kg (99.66 mol) of PDCB and 13.24 kg (133.6 mol) of NMP were added, and the molar ratio of PDCB / total sulfur was 1.01. The temperature was raised to 240°C in about 1.5 hours and maintained for 0.5 hour; then,the temperature was raised to 280°C at a rate of 1.5°C/min, and maintained for 4 hours. After the insulation, the temperature was lowered to 160°C in about 1 hour. The contents in the reactor were centrifuged and spin-dried. The filter cake was rinsed with 30.0 kg of 160°C NMP, spin-dried, and then rinsed with 40.15 kg of a 10% hydrochloric acid solution (containing 110.0 mol of hydrochloric acid) and spin-dried. The filtrates were combined and subject to azeotropic distillation to recover 10.15 kg of pentoic acid, followed by vacuum distillation to recover 75.9 kg of NMP solvent.

The filter cake rinsed above was washed with deionized water for several times, and the washed filter cake was dried to obtain PPS-2, of which the mass yield was 94.3%, the melt viscosity was 90 Pa·s, the nitrogen content was 390 ppm, the thermal stability was 0.983, and the weight average molecular weight was $4.1 \times 10^4$.

c. Preparation of PPS-3

In a 150 L reactor, 29.93 kg (300.0 mol) of NMP, 17.6 kg (220 mol) of 50% aqueous sodium hydroxide solution and 12.28 kg (120.0 mol) of isopentoic acid were added, and heated up to 100°C at a rate of 1.5°C / min under a stirring speed of 200 rpm and nitrogen protection, insulated for 2 hours; after the insulation, the system was warmed up to 190°C at a rate of 1.5°C/min to remove 8.93 kg of aqueous solution (97.84% water content), and then cooled down to 110°C. 11.22 Kg (100.0 mol) 50% sodium hydrosulfide and 2.97 kg (30.0 mol) of NMP were added and heated to 180°C at a rate of 1.5°C/min at the same stirring speed to remove 7.35 kg of aqueous solution (90.46% water content), and cooled down to 150°C after dehydration. At this time, the amount of total sulfur in the system was 99.0 mol, the water content was 45.85 mol, and the molar ratio of total NaOH / total sulfur was 1.02.

In the above reactor, 14.55 kg (99.0 mol) of PDCB and 9.42 kg (95.0 mol) of NMP were added, and the molar ratio of PDCB / total sulfur was 1.00. The temperature was raised to 230°C in about 1 hour and maintained for 2 hours; then,the temperature was raised to 270°C at a rate of 1.0°C/min, and maintained for 3 hours. After the insulation, the temperature was lowered to 155°C in about 1 hour. The contents in the reactor were centrifuged and spin-dried. The filter cake was rinsed with 30.0 kg of 155°C NMP, spin-dried, and then rinsed with 50.37 kg of a 10% hydrochloric acid solution (containing 138.0 mol of hydrochloric acid) and spin-dried. The filtrates were combined and subject to azeotropic distillation to recover 12.24 kg of isopentoic acid, followed by vacuum distillation to recover 70.56 kg of NMP solvent.

The filter cake rinsed above was washed with deionized water for several times, and the washed filter cake was dried to obtain PPS-3, of which the mass yield was 93.5%, the melt viscosity was 143 Pa s, the nitrogen content was 380 ppm, the thermal stability was 0.987, and the weight average molecular weight was $4.9 \times 10^4$.

**Examples (preparation of high molecular weight polyphenylene sulfide resin)**

Example 1

In a 10 L reactor, 0.1 mol p-dibromobenzene, 0.2 molNaHS, 0.2 mol 50% NaOH aqueous solution and 2000 g NMP were added and rapidly heated to 190°C under a stirring speed of 200 rpm and nitrogen protection, insulated for 3 hours; after the insulation, the system was cooled down to 160°C, to synthesize a chain extender averagely containing one phenylene group, to which 1000 g PPS-1 and 1000 g NMP were added, and then 50% NaOH solution was used to adjust the pH of the system to 9.5. Under a stirring speed of 200rpm and nitrogen protection, the temperature was raised to 260°C at a rate of 1.0°C/min, and was maintained for 3 hours. After the insulation, the temperature was lowered to 160°C in about 1 hour. The contents in the reactor were centrifuged and spin-dried. The filter cake was washed with deionized water for several times, and the washed filter cake was dried to obtain white polyphenylene sulfide resin, of which the mass yield was 98.7%, the melt viscosity was 250 Pa·s, the nitrogen content was 420 ppm, the thermal stability was 0.965, and the weight average molecular weight was $6.1 \times 10^4$.

Example 2

In a 10 L reactor, 2.4 mol p-dibromobenzene, 2.8 molNaHS, 2.8 mol 50% NaOH aqueous solution and 2000 g NMP were added and rapidly heated to 220°C under a stirring speed of 200 rpm and nitrogen protection, insulated for 2 hours; after the insulation, the system was cooled down to 160°C, to synthesize a chain extender averagely containing six phenylene groups, to which 1000 g PPS-1 and 2000 g NMP were added, and then 50% NaOH solution was used to adjust the pH of the system to 11. Under a stirring speed of 200rpm and nitrogen protection, the temperature was raised to 280°C at a rate of 1.5°C/min, and was maintained for 2 hours. After the insulation, the temperature was lowered to 140°C in about 2 hours. The contents in the reactor were centrifuged and spin-dried. The filter cake was washed with deionized water for several times, and the washed filter cake was dried to obtain white polyphenylene sulfide resin, of which the mass yield was 98.3%, the melt viscosity was 450 Pa·s, the nitrogen content was 430 ppm, the thermal stability was 0.961, and the weight average molecular weight was $7.6 \times 10^4$.

Example 3

In a 10 L reactor, 0.9 mol p-dibromobenzene, 1.2 molNaHS, 1.2 mol 50% NaOH aqueous solution and 3000 g NMP were added and rapidly heated to 220°C under a stirring speed of 200 rpm and nitrogen protection, insulated for 1 hour; after the insulation, a chain extender averagely containing three phenylene groups was synthesized, and cooled down to 160°C, to which 1000 g PPS-1 and 2000 g NMP were added, and then 50% NaOH solution was used to adjust the pH of the system to 10.5. Under a stirring speed of 200rpm and nitrogen protection, the temperature was raised to 270°C at a rate of 1.5°C/min, and was maintained for 1 hour. After the insulation, the temperature was lowered to 150°C in about 1.5 hours. The contents in the reactor were centrifuged and spin-dried. The filter cake was washed with deionized water for several times, and the washed filter cake was dried to obtain white polyphenylene sulfide resin, of which the mass yield was 98.5%, the melt viscosity was 405 Pa·s, the nitrogen content was 420 ppm, the thermal stability was 0.963, and the weight average molecular weight was $7.3 \times 10^4$.

Example 4

In a 10 L reactor, 0.1 mol 4,4'-dibromodiphenylsulfide, 0.2 molNaHS, 0.2 mol 50% NaOH aqueous solution and 2000 g NMP were added and rapidly heated to 220°C under a stirring speed of 200 rpm and nitrogen protection, insulated for 1 hour; after the insulation, the system was cooled down to 160°C, to synthesize a chain extender averagely containing two phenylene groups, to which 1000 g PPS-2 and 1000 g NMP were added, and then 50% NaOH solution was used to adjust the pH of the system to 10. Under a stirring speed of 200rpm and nitrogen protection, the temperature was raised to 260°C at a rate of 1.0°C/min, and was maintained for 3 hours. After the insulation, the temperature was lowered to 160°C in about 1 hour. The contents in the reactor were centrifuged and spin-dried. The filter cake was washed with deionized water for several times, and the washed filter cake was dried to obtain white polyphenylene sulfide resin, of which the mass yield was 98.7%, the melt viscosity was 447 Pa·s, the nitrogen content was 410 ppm, the thermal stability was 0.969, and the weight average molecular weight was $7.6 \times 10^4$.

Example 5

In a 10 L reactor, 1.2 mol p-dibromobenzene, 1.5 molNaHS, 1.5 mol 50% NaOH aqueous solution and 2000 g NMP were added and rapidly heated to 220°C under a stirring speed of 200 rpm and nitrogen protection, insulated for 1 hour; after the insulation, the system was cooled down to 160°C, to synthesize a chain extender averagely containing four phenylene groups, to which 1000 g PPS-2 and 1000 g NMP were added, and then 50% NaOH solution was used to adjust the pH of the system to 10.5. Under a stirring speed of 200rpm and nitrogen protection, the temperature was raised to 270°C at a rate of 1.0°C/min, and was maintained for 1 hour. After the insulation, the temperature was lowered to 160°C in about 1 hour. The contents in the reactor were centrifuged and spin-dried. The filter cake was washed with deionized water for several times, and the washed filter cake was dried to obtain white polyphenylene sulfide resin, of which the mass yield was 98.7%, the melt viscosity was 646 Pa·s, the nitrogen content was 390 ppm, the thermal stability was 0.976, and the weight average molecular weight was $8.7 \times 10^4$.

Example 6

In a 10 L reactor, 0.2 mol p-dibromobenzene, 0.4 molNaHS, 0.4 mol 50% NaOH aqueous solution and 3000 g NMP were added and rapidly heated to 200°C under a stirring speed of 200 rpm and nitrogen protection, insulated for 3 hours; after the insulation, the system was cooled down to 160°C, to synthesize a chain extender averagely containing one phenylene group, to which 1000 g PPS-3 and 2000 g NMP were added, and then 50% NaOH solution was used to adjust the pH of the system to 11. Under a stirring speed of 200rpm and nitrogen protection, the temperature was raised to 280°C at a rate of 1.5°C/min, and was maintained for 2 hours. After the insulation, the temperature was lowered to 140°C in about 2 hours. The contents in the reactor were centrifuged and spin-dried. The filter cake was washed with deionized water for several times, and the washed filter cake was dried to obtain white polyphenylene sulfide resin, of which the mass yield was 98.3%, the melt viscosity was 950 Pa·s, the nitrogen content was 390 ppm, the thermal stability was 0.971, and the weight average molecular weight was $10.1 \times 10^4$.

Comparative Example

In a 10 L reactor, 0.1 mol 4,4'-dibromodiphenylsulfide, 0.2 molNaHS, 0.2 mol 50% NaOH aqueous solution and 2000 g NMP were added and rapidly heated to 220°C under a stirring speed of 200 rpm and nitrogen protection, insulated for 1 hour; after the insulation, the system was cooled down to 160°C, to synthesize a chain extender averagely containing two phenylene groups, to which 1000 g PPS-2 and 1000 g NMP were added, and then 50% NaOH solution was used to adjust the pH of the system to 8.5. Under a stirring speed of 200rpm and nitrogen protection, the temperature was raised to 260°C at a rate of 1.0°C/min, and was maintained for 3 hours. After the insulation, the temperature was lowered to 160°C in about 1 hour. The contents in the reactor were centrifuged and spin-dried. The filter cake was washed with deionized water for several times, and the washed filter cake was dried to obtain white polyphenylene sulfide resin, of which the mass yield was 98.5%, the melt viscosity was 182 Pa·s, the nitrogen content was 410 ppm, the thermal stability was 0.973, and the weight average molecular weight was $5.4 \times 10^4$.

Industrial availability

The disclosure is capable of preparing a high molecular weight polyphenylene sulfide resin in industry.

**Claims**

1. A high molecular weight polyphenylene sulphide resin which is obtained by a thickening reaction between a primary polyphenylene sulphide and a chain extender represented by Formula (1):

$$MS\text{-}L\text{-}SM \ldots \qquad (1)$$

wherein S represents a sulphur atom, M represents a metal ion, preferably an alkali metal ion, more preferably a Na ion, and L represents a divalent linking group containing an aromatic group, the primary polyphenylene sulphide is a polycondensation product of a sulphur-containing compound and a halogenated aromatic compound, and the high molecular weight polyphenylene sulphide resin has a weight-average molecular weight, measured as defined in the description, of $6.0 \times 10^4$ or more, preferably $6.0 \times 10^4$ to $10.1 \times 10^4$,
a thermal stability index, measured as defined in the description, of 0.95 or more, preferably 0.96 or more, and
a melt viscosity at 310 °C, measured as defined in the description, of 250 to 950 Pa·s.

2. The high molecular weight polyphenylene sulphide resin according to claim 1, wherein the halogenated aromatic compound is a dihalogenated aromatic compound, the thickening reaction is carried out under alkaline conditions, and the primary polyphenylene sulphide is used in a molten or melted form, and
wherein the primary polyphenylene sulphide has a melt viscosity at 310 °C of 40 to 150 Pa s, and the high molecular weight polyphenylene sulphide has a thermal stability index, measured as defined in the description, of 0.95 or more, preferably 0.96 or more, and a melt viscosity at 310 °C, measured as defined in the description, of 250 to 950 Pa s.

3. The high molecular weight polyphenylene sulphide resin according to claim 1 or 2, wherein the polyphenylene sulphide resin has a nitrogen content, measured as described in the description, of 430 ppm or less, preferably 420 ppm or less, and more preferably 410 ppm or less.

4. The polyphenylene sulphide resin according to any one of claims 1 to 3, wherein -L- in Formula (1) is a structure such as is represented by Formula (2):

$$-Ar\text{-}(\text{-S-Ar-})_n\text{- ...} \qquad (2)$$

wherein Ar is a substituted or unsubstituted aromatic group, preferably an arylene group and more preferably a phenylene group, n is greater than or equal to 0 and preferably 0 to 5, -SM and -S- or -SM are in para-positions on the aromatic ring; in -(-S-Ar-)$_n$-, when n $\geq$ 2, S on same aromatic ring are in para-positions.

5. A method for preparing a high molecular weight polyphenylene sulphide resin, comprising: a polycondensation reaction to obtain a primary polyphenylene sulphide, the polycondensation reaction using a sulphur-containing compound and a halogenated aromatic compound as reactants; and
a thickening reaction to obtain a high molecular weight polyphenylene sulphide resin, the thickening reaction being carried out using the primary polyphenylene sulphide and a chain extender represented by Formula (1):

$$\text{MS-L-SM ...} \qquad (1)$$

wherein S represents a sulphur atom, M represents a metal ion, preferably an alkali metal ion, more preferably an Na ion, and L represents a divalent linking group containing an aromatic group;
the high molecular weight polyphenylene sulfide resin has a weight average molecular weight, measured as defined in the description, of $6.0 \times 10^4$ or more, preferably $6.0 \times 10^4$ to $10.1 \times 10^4$.

6. The method according to claim 5, wherein the polycondensation reaction has a reaction temperature of 220 to 280 °C; the reaction is carried out in the presence of a polycondensation aid selected from one or more of alkali compounds and fatty acids; the sulphur-containing compound is selected from hydrosulphides; and the halogenated aromatic compound is a dihalogenated aromatic compound, preferably a dichloro aromatic compound, and more preferably dichlorobenzene.

7. The method according to claim 6, wherein the alkali compound is used in an amount of 1.0 to 1.02 mol based on 1.0 mol of total sulphur; the fatty acid is selected from one or more of medium- and short-chain fatty acids; and a molar ratio of the fatty acid to the sulphur-containing compound is 0.8:1 to 1.2:1.

8. The method according to any one of claims 5 to 7, wherein: in the polycondensation reaction, the halogenated aromatic compound is used in an amount of 1.00 to 1.02 mol based on 1 mol of total sulphur; the polycondensation reaction is carried out in the presence of a solvent; and the solvent is used in an amount of 4.2 to 4.7 mol based on 1 mol of total sulphur.

9. The method according to any one of claims 5 to 8, wherein the polycondensation reaction is carried out under conditions in which a water content is less than 0.5 mol/mol total sulphur, and the method further comprises steps of separating and/or washing and/or drying after the polycondensation reaction, wherein separation is preferably carried out within a range of 155 to 180 °C, washing preferably comprises washing with water and/or pickling, and washing is performed until a mass content of a halide ion in a filtrate is 0.01 % or less.

10. The method according to any one of claims 5 to 9, wherein the primary polyphenylene sulfide has a weight average molecular weight, measured as defined in the description, of $3.0\times10^4$ to $5.0\times10^4$, a melt viscosity at 310°C, measured as defined in the description, of 40 to 150 Pa·s, and a thermal stability index, measured as defined in the description, of 0.96 or more.

11. The method according to any one of claims 5 to 10, wherein the high molecular weight polyphenylene sulfide has a thermal stability index, measured as defined in the description, of 0.95 or more, preferably 0.96 or more; and a melt viscosity at 310°C, measured as defined in the description, of 250 to 950 Pa s.

12. The method according to any one of claims 5 to 9, wherein -L- in Formula (1) is a structure such as is represented by Formula (2):

$$\text{-Ar-(-S-Ar-)}_n\text{- ...} \qquad (2)$$

wherein Ar is a substituted or unsubstituted aromatic group, preferably an arylene group and more preferably a phenylene group, n is greater than or equal to 0 and preferably 0 to 5, -SM and -S- or -SM are in para-positions on the aromatic ring; in $\text{-(-S-Ar-)}_n$-, when $n \geq 2$, S on same aromatic ring are in para-positions.

13. A composition which comprises the high molecular weight polyphenylene sulphide resin according to any one of claims 1 to 4 or a high molecular weight polyphenylene sulphide resin obtained by the method according to any one of claims 5 to 12.

14. The use of the high molecular weight polyphenylene sulphide resin according to any one of claims 1 to 4, or the high molecular weight polyphenylene sulphide resin obtained by the method according to any one of claims 5 to 12, or the composition according to claim 13 in automotive parts, electronic/electrical equipment, chemical engineering and the machinery industry.

15. An article obtained by moulding the high molecular weight polyphenylene sulphide resin according to any one of claims 1 to 4, or the high molecular weight polyphenylene sulphide resin obtained by the method according to any one of claims 5 to 12, or the composition according to claim 13, wherein the article can be a plate, a pipe, a rod, a fibre, a membrane or a thin film.

**Patentansprüche**

1. Hochmolekulares Polyphenylensulfidharz, das durch eine Verdickungsreaktion zwischen einem primären Polyphenylensulfid und einem Kettenverlängerer erhalten wird, repräsentiert durch Formel (1):

$$\text{MS-L-SM ...} \qquad (1),$$

wobei S ein Schwefelatom repräsentiert, M ein Metallion, vorzugsweise ein Alkalimetallion, stärker bevorzugt ein Na-Ion, repräsentiert, und L eine divalente Verbindungsgruppe, die eine aromatische Gruppe enthält, repräsentiert,
das primäre Polyphenylensulfid ein Polykondensationsprodukt einer schwefelhaltigen Verbindung und einer halogenierten aromatischen Verbindung ist, und
das hochmolekulare Polyphenylensulfidharz ein gewichtsmittleres Molekulargewicht, gemessen wie in der Beschreibung definiert, von $6,0\times10^4$ oder mehr, vorzugsweise von $6,0\times10^4$ bis $10,1\times10^4$,
einen Temperaturbeständigkeitsindex, gemessen wie in der Beschreibung definiert, von 0,95 oder mehr, vorzugsweise 0,96 oder mehr, und
eine Schmelzviskosität bei 310 °C, gemessen wie in der Beschreibung definiert, von 250 bis 950 Pa·s aufweist.

2. Hochmolekulares Polyphenylensulfidharz nach Anspruch 1, wobei die halogenierte aromatische Verbindung eine dihalogenierte aromatische Verbindung ist, die Verdickungsreaktion unter alkalischen Bedingungen ausgeführt wird, und das primäre Polyphenylensulfid in einer geschmolzenen oder schmelzflüssigen Form verwendet wird, und wobei das primäre Polyphenylensulfid eine Schmelzviskosität bei 310 °C von 40 bis 150 Pa·s aufweist, und das hochmolekulare Polyphenylensulfid einen Temperaturbeständigkeitsindex, gemessen wie in der Beschreibung definiert, von 0,95 oder mehr, vorzugsweise 0,96 oder mehr, und eine Schmelzviskosität bei 310 °C, gemessen wie in der Beschreibung definiert, von 250 bis 950 Pa·s aufweist.

**3.** Hochmolekulares Polyphenylensulfidharz nach Anspruch 1 oder 2, wobei das Polyphenylensulfidharz einen Stickstoffgehalt, gemessen wie in der Beschreibung definiert, von 430 ppm oder weniger, vorzugsweise 420 ppm oder weniger, und stärker bevorzugt 410 ppm oder weniger aufweist.

**4.** Polyphenylensulfidharz nach einem der Ansprüche 1 bis 3, wobei -L- in der Formel (1) eine Struktur ist, wie sie beispielsweise repräsentiert ist durch Formel (2):

$$-Ar-(-S-Ar-)_n- \dots \qquad (2),$$

wobei Ar eine substituierte oder nicht-substituierte aromatische Gruppe, vorzugsweise eine Arylengruppe und stärker bevorzugt eine Phenylengruppe ist, n größer als oder gleich 0 und vorzugsweise 0 bis 5 ist, sich -SM und -S- oder -SM paraständig an dem aromatischen Ring befinden; sich in -(-S-Ar-)$_n$-, wenn n $\geq$ 2, S paraständig an demselben aromatischen Ring befinden.

**5.** Verfahren zum Herstellen eines hochmolekularen Polyphenylensulfidharzes, umfassend: eine Polykondensationsreaktion, um ein primäres Polyphenylensulfid zu erhalten, wobei die Polykondensationsreaktion eine schwefelhaltige Verbindung und eine halogenierte aromatische Verbindung als Reaktanten nutzt; und

eine Verdickungsreaktion, um ein hochmolekulares Polyphenylensulfidharz zu erhalten, wobei die Verdickungsreaktion unter Verwendung des primären Polyphenylensulfids und eines Kettenverlängerers ausgeführt wird, repräsentiert durch die Formel (1):

$$MS-L-SM \dots \qquad (1),$$

wobei S ein Schwefelatom repräsentiert, M ein Metallion, vorzugsweise ein Alkalimetallion, stärker bevorzugt ein Na-Ion, repräsentiert, und L eine divalente Verbindungsgruppe repräsentiert, die eine aromatische Gruppe enthält;
das hochmolekulare Polyphenylensulfidharz ein gewichtsmittleres Molekulargewicht, gemessen wie in der Beschreibung definiert, von $6,0\times10^4$ oder mehr, vorzugsweise von $6,0\times10^4$ bis $10,1\times10^4$, aufweist.

**6.** Verfahren nach Anspruch 5, wobei die Polykondensationsreaktion eine Reaktionstemperatur von 220 bis 280 °C aufweist; die Reaktion unter Anwesenheit einer aus einer oder mehreren von Alkaliverbindungen und Fettsäuren ausgewählten Polykondensationshilfe ausgeführt wird; die schwefelhaltige Verbindung aus Hydrosulfiden ausgewählt wird; und die halogenierte aromatische Verbindung eine dihalogenierte aromatische Verbindung ist, vorzugsweise eine aromatische Dichlorverbindung und stärker bevorzugt Dichlorbenzol.

**7.** Verfahren nach Anspruch 6, wobei die Alkaliverbindung in einer Menge von 1,0 bis 1,02 mol, basierend auf 1,0 mol Gesamtschwefel, verwendet wird; die Fettsäure aus einer oder mehreren von mittel- und kurzkettigen Fettsäuren ausgewählt ist; und ein Molverhältnis der Fettsäure zur schwefelhaltigen Verbindung 0,8:1 bis 1,2:1 ist.

**8.** Verfahren nach einem der Ansprüche 5 bis 7, wobei: die halogenierte aromatische Verbindung in der Polykondensationsreaktion in einer Menge von 1,0 bis 1,02 mol, basierend auf 1,0 mol Gesamtschwefel, verwendet wird; die Polykondensationsreaktion unter Anwesenheit eines Lösemittels ausgeführt wird; und das Lösemittel in einer Menge von 4,2 bis 4,7 mol, basierend auf 1 mol Gesamtschwefel, verwendet wird.

**9.** Verfahren nach einem der Ansprüche 5 bis 8, wobei die Polykondensationsreaktion unter Bedingungen ausgeführt wird, in denen ein Wassergehalt weniger als 0,5 mol/mol Gesamtschwefel beträgt, und das Verfahren ferner Schritte des Trennens und/oder Waschens und/oder Trocknens nach der Polykondensationsreaktion umfasst, wobei das Trennen vorzugsweise innerhalb eines Bereichs von 155 bis 180 °C ausgeführt wird, das Waschen vorzugsweise ein Waschen mit Wasser und/oder Beizen umfasst, und Waschen ausgeführt wird, bis ein Massengehalt eines Halogenidions in einem Filtrat 0,01 % oder weniger ist.

**10.** Verfahren nach einem der Ansprüche 5 bis 9, wobei das primäre Polyphenylensulfid ein gewichtsmittleres Molekulargewicht, gemessen wie in der Beschreibung definiert, von $3,\times10^4$ bis $5,0\times10^4$, eine Schmelzviskosität bei 310 °C, gemessen wie in der Beschreibung definiert, von 40 bis 150 Pa·s und einen Temperaturbeständigkeitsindex, gemessen wie in der Beschreibung definiert, von 0,96 oder mehr aufweist.

**11.** Verfahren nach einem der Ansprüche 5 bis 10, wobei das hochmolekulare Polyphenylensulfid einen Temperaturbeständigkeitsindex, gemessen wie in der Beschreibung definiert, von 0,95 oder mehr, vorzugsweise 0,96 oder mehr; und eine Schmelzviskosität bei 310 °C, gemessen wie in der Beschreibung definiert, von 250 bis 950 Pa·s aufweist.

12. Verfahren nach einem der Ansprüche 5 bis 9, wobei -L- in der Formel (1) eine Struktur ist, wie sie beispielsweise durch Formel (2) repräsentiert wird:

$$-Ar- (-S-Ar-)_n- ... \qquad (2),$$

wobei Ar eine substituierte oder nicht-substituierte aromatische Gruppe, vorzugsweise eine Arylengruppe und stärker bevorzugt eine Phenylengruppe ist, n größer als oder gleich 0 und vorzugsweise 0 bis 5 ist, sich -SM und -S- oder -SM paraständig an dem aromatischen Ring befinden; sich in -(-S-Ar-)$_n$-, wenn n $\geq$ 2, S paraständig an demselben aromatischen Ring befinden.

13. Zusammensetzung, die hochmolekulares Polyphenylensulfidharz nach einem der Ansprüche 1 bis 4 oder ein hochmolekulares Polyphenylensulfidharz, das durch das Verfahren nach einem der Ansprüche 5 bis 12 erhalten wird, umfasst.

14. Verwendung des hochmolekularen Polyphenylensulfidharzes nach einem der Ansprüche 1 bis 4, oder des durch das Verfahren nach einem der Ansprüche 5 bis 12 erhaltenen hochmolekularen Polyphenylensulfidharzes, oder der Zusammensetzung nach Anspruch 13 in Automobilteilen, elektronischer/elektrischer Ausrüstung, in der Chemietechnik und in der Maschinenbauindustrie.

15. Artikel, erhalten durch Formung des hochmolekularen Polyphenylensulfidharzes nach einem der Ansprüche 1 bis 4, oder des durch das Verfahren nach einem der Ansprüche 5 bis 12 erhaltenen hochmolekularen Polyphenylensulfidharzes, oder der Zusammensetzung nach Anspruch 13, wobei der Artikel eine Platte, ein Rohr, eine Stange, eine Faser, eine Membran oder eine dünne Folie sein kann.

## Revendications

1. Résine de poly(sulfure de phénylène) de poids moléculaire élevé qui est obtenue par une réaction d'épaississement entre un poly(sulfure de phénylène) primaire et un prolongateur de chaîne représenté par la formule (1) :

$$MS-L-SM... \qquad (1)$$

où S représente un atome de soufre, M représente un ion métallique, de préférence un ion d'un métal alcalin, plus préférentiellement un ion Na, et L représente un groupement de liaison divalent contenant un groupement aromatique,
le poly(sulfure de phénylène) primaire est un produit de polycondensation d'un composé contenant du soufre et d'un composé aromatique halogéné, et
la résine de poly(sulfure de phénylène) de poids moléculaire élevé a un poids moléculaire moyen en poids mesuré, tel que défini dans la description, de $6,0 \times 10^4$ ou plus, de préférence de $6,0 \times 10^4$ à $10,1 \times 10^4$,
un indice de stabilité thermique, mesuré tel que défini dans la description, de 0,95 ou plus, de préférence de 0,96 ou plus, et
une viscosité à l'état fondu à 310 °C, mesurée tel que défini dans la description, de 250 à 950 Pa · s.

2. Résine de poly(sulfure de phénylène) de poids moléculaire élevé selon la revendication 1, dans laquelle le composé aromatique halogéné est un composé aromatique dihalogéné, la réaction d'épaississement est réalisée dans des conditions alcalines, et le poly(sulfure de phénylène) primaire est utilisé dans une forme en fusion ou fondue, et dans laquelle le poly(sulfure de phénylène) primaire a une viscosité à l'état fondu à 310 °c de 40 à 150 Pa· s, et le poly(sulfure de phénylène) de poids moléculaire élevé a un indice de stabilité thermique, mesuré tel que défini dans la description, de 0,95 ou plus, de préférence de 0,96 ou plus, et une viscosité à l'état fondu à 310 °C, mesurée tel que défini dans la description, de 250 à 950 Pa · s.

3. Résine de poly(sulfure de phénylène) de poids moléculaire élevé selon la revendication 1 ou la revendication 2, dans lequel la résine de poly(sulfure de phénylène) a une teneur en azote, mesurée tel que décrit dans la description, de 430 ppm ou moins, de préférence de 420 ppm ou moins, et plus préférentiellement de 410 ppm ou moins.

4. Résine de poly(sulfure de phénylène) de poids moléculaire élevé selon l'une quelconque des revendications 1 à 3, dans laquelle -L- dans la formule (1) est une structure telle que représentée par la formule (2) :

$$-Ar-(-S-Ar-)_n-.... \qquad (2)$$

où Ar est un groupement aromatique substitué ou non substitué, de préférence un groupement arylène et plus préférentiellement un groupement phénylène, n est supérieur ou égal à 0 et de préférence égal à 0 à 5, -SM et -S- ou -SM sont dans des positions para sur le cycle aromatique ; dans -(-S-Ar-)$_n$-, lorsque n ≥ 2, les S sur un même cycle aromatique sont dans des positions para.

5. Procédé de préparation d'une résine de poly(sulfure de phénylène) de poids moléculaire élevé comprenant : une réaction de polycondensation pour obtenir un poly(sulfure de phénylène) primaire, la réaction de polycondensation utilisant un composé contenant du soufre et un composé aromatique halogéné en tant que réactifs ; et

une réaction d'épaississement pour obtenir une résine de poly(sulfure de phénylène) de poids moléculaire élevé, la réaction d'épaississement étant réalisée en utilisant le poly(sulfure de phénylène) primaire et un prolongateur de chaîne représenté par la formule (1) :

$$MS-L-SM... \qquad (1)$$

où S représente un atome de soufre, M représente un ion métallique, de préférence un ion d'un métal alcalin, plus préférentiellement un ion Na, et L représente un groupement de liaison divalent contenant un groupement aromatique,
la résine de poly(sulfure de phénylène) de poids moléculaire élevé a un poids moléculaire moyen en poids mesuré tel que défini dans la description, de $6,0 \times 10^4$ ou plus, de préférence de $6,0 \times 10^4$ à $10,1 \times 10^4$.

6. Procédé selon la revendication 5, dans lequel la réaction de polycondensation a une température de réaction de 220 à 280 °C ; la réaction est réalisée en présence d'une aide à la polycondensation choisie parmi un ou plusieurs composés alcalins et acides gras ; le composé contenant du soufre est choisi parmi des hydrosulfures ; et le composé aromatique halogéné est un composé aromatique dihalogéné, de préférence un composé aromatique dichloré, et plus préférentiellement du dichlorobenzène.

7. Procédé selon la revendication 6, dans lequel le composé alcalin est utilisé dans une quantité de 1,0 à 1,02 moles sur la base de 1,0 mole de soufre total ; l'acide gras est choisi parmi un ou plusieurs acides gras à chaine moyenne ou à chaîne courte ; et un rapport molaire de l'acide gras sur le composé contenant du soufre est 0,8 : 1 à 1,2 : 1.

8. Procédé selon l'une quelconque des revendications 5 à 7, dans lequel, dans la réaction de polycondensation, le composé aromatique halogéné est utilisé dans une quantité de 1,00 à 1,02 mole sur la base d' 1 mole de soufre total ; la réaction de polycondensation est réalisée en présence d'un solvant ; et le solvant est utilisé dans une quantité de 4,2 à 4,7 moles sur la base de 1 mole de soufre total.

9. Procédé selon l'une quelconque des revendications 5 à 8, dans lequel la réaction de polycondensation est réalisée dans des conditions dans lesquelles une teneur en eau est inférieure à 0,5 mole/mole de soufre total, et le procédé comprend en outre des étapes de séparation et/ou de lavage, et/ou de séchage après la réaction de polycondensation, où la séparation est de préférence réalisée dans une plage de 155 à 180 °C, le lavage comprend de préférence un lavage avec de l'eau et/ou un décapage, et le lavage est effectué jusqu'à une teneur en masse d'un ion halogénure dans le filtrat est de 0,01 % ou moins.

10. Procédé selon l'une quelconque des revendications 5 à 9, dans lequel le poly(sulfure de phénylène) primaire a un poids moléculaire moyen en poids, mesuré tel que défini dans la description de $3,0 \times 10^4$ à $5,0 \times 10^4$, une viscosité à l'état fondu à 310 °C, mesurée tel que défini dans la description de 40 à 150 Pa · s, et un indice de stabilité thermique, mesuré tel que défini dans la description de 0,96 ou plus.

11. Procédé selon l'une quelconque des revendications 5 à 10, dans lequel le poly(sulfure de phénylène) de poids moléculaire élevé a un indice de stabilité thermique, mesuré tel que défini dans la description, de 0,95 ou plus, de préférence de 0,96 ou plus, et une viscosité à l'état fondu à 310 °C, mesurée tel que défini dans la description, de 250 à 950 Pa · s.

**12.** Procédé selon l'une quelconque des revendications 5 à 9, dans lequel -L- dans la formule (1) est une structure telle que représentée par la formule (2) :

$$-Ar-(-S-Ar-)_n-.... \qquad (2)$$

où Ar est un groupement aromatique substitué ou non substitué, de préférence un groupement arylène et plus préférentiellement un groupement phénylène, n est supérieur ou égal à 0 et de préférence égal à 0 à 5, -SM et -S- ou -SM sont dans des positions para sur le cycle aromatique ; dans $-(-S-Ar-)_n-$, lorsque $n \geq 2$, les S sur un même cycle aromatique sont dans des positions para.

**13.** Composition qui comprend la résine de poly(sulfure de phénylène) de poids moléculaire élevé selon l'une quelconque des revendications 1 à 4 ou une résine de poly(sulfure de phénylène) de poids moléculaire élevé obtenue par le procédé selon l'une quelconque des revendications 5 à 12.

**14.** Utilisation de la résine de poly(sulfure de phénylène) de poids moléculaire élevé selon l'une quelconque des revendications 1 à 4 ou de la résine de poly(sulfure de phénylène) de poids moléculaire élevé obtenue par le procédé selon l'une quelconque des revendications 5 à 12, ou de la composition selon la revendication 13 dans des pièces d'automobile, l'équipement électronique/électrique, l'ingénierie chimique et l'industrie mécanique.

**15.** Article obtenu par moulage de la résine de poly(sulfure de phénylène) de poids moléculaire élevé selon l'une quelconque des revendications 1 à 4 ou de la résine de poly(sulfure de phénylène) de poids moléculaire élevé obtenue par le procédé selon l'une quelconque des revendications 5 à 12, ou de la composition selon la revendication 13, où l'article peut être une plaque, une conduite, une tige, une fibre, une membrane ou un film mince.

**EP 3 725 821 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001261832 A
- JP 2002265604 A
- JP 2004099684 A
- JP 2005054169 A
- JP 2006182993 A
- JP 2007009128 A
- JP 2009057414 A
- JP 2010053335 A
- US 4286018 A
- WO 2006059509 A

- CN 200480015430
- CN 104744698 A
- CN 103073720 A
- US 3354129 A
- CN 201410177091
- CN 201580060684
- CN 88108247
- US 4748231 A
- CN 201310142044
- CN 201510129926